# EUROPEAN PATENT APPLICATION

(11) **EP 0 939 497 A1**
(43) Date of publication of application: **01.09.1999**
(21) Application number: 98103216.2
(22) Date of filing: 24.02.1998
(51) Int. Cl.: H04B 1/38, H04M 1/60, H04M 1/00

(54) **Adapter apparatus for telephone**

(71) Applicant: GEN ENGINEERING CO., LTD., Shinagawa-ku Tokyo (JP)
(72) Inventor: Ono, Hiroshi, Tokyo (JP)
(74) Representative: Sajda, Wolf E., Dipl.-Phys.

(57) **Abstract**

An adapter apparatus (1) is interposed between, on the one hand, a CD player body (2) and a portable telephone (4) and, on the other hand, a receiving headphone (3) to effect mutual transmission and reception therebetween for producing sound. The apparatus includes a detecting portion (6) for detecting call incoming to the portable telephone (4) and a switchover portion (8) for effecting a switchover concerning transmission to the receiving headphone (3) of one of the receiving speech signal from the portable telephone (4) and an audio signal from the CD player body (2), and the switchover portion (8) is arranged to effect the switchover concerning the signal transmission on the basis of the detection by the detection portion (6).

## Description

### BACKGROUND OF THE INVENTION

### Field of the Invention:

The present invention relates to an adapter apparatus for connecting a telephone and a sound reproducing device which can be freely fitted to an ear for converting a received signal to speech and for connecting an audio-signal output device and the sound reproducing device to produce sound and allow telephone communication via the sound reproducing device.

### Description of the Related Art:

As conventional telephones, a installation-type telephone which is installed on a desktop, a portable telephone which can be conveniently carried, and the like are known.

The installation-type telephone, which is comprised of a telephone body installed for connection to a telephone line installed at a predetermined position as well as a handset constituted by a receiver for issuing receiving voice and a transmitter for receiving transmitting voice, is a telephone of a type in which transmission and reception of a receiving speech signal and a transmitting speech signal in the form of an electrical signal or electromagnetic wave are effected between the telephone body and the handset.

With the above-described installation-type telephone, as a method of allowing a user to know calling incoming, the following three methods are adopted: a method in which a sound such as a buzzer noise or bell noise is issued from the telephone body, the receiver, or the like simultaneously with the call incoming so as to notify the user of the call incoming, a method in which light is flashed by flashing a flash lamp or the like provided on the telephone body simultaneously with the call incoming so as to notify the user of the call incoming, and a method in the foregoing two methods are combined to notify the user of the call incoming.

On the other hand, the above-described portable telephone is a telephone of a type which transmits a transmitting speech signal and receives a receiving speech signal in the form of electromagnetic wave, and which can be carried around in a movable manner within the range the electromagnetic waves reach.

With such a portable telephone, in addition to the above-described three methods concerning the installation-type telephone, a method is adopted as a fourth method in which, for example, a vibrating unit adapted to vibrate simultaneously with the call incoming is provided on at least a portion of the main body of the portable telephone, and as the portable telephone is carried in a state in which this vibrating unit is brought substantially into contact with a part of the user's physical body, vibrations of the vibrating unit are imparted to the physical body at the time of call incoming, so as to notify the user of the call incoming.

As such, when the telephone has received call incoming while the user is wearing an earphone or a headphone serving as a sound reproducing device at an ear or ears and is listening to a radio program, a music program, or the like from such as a radio or a headphone stereo player serving as an audio-signal output device, the user, upon directly hearing the sound issued from the telephone by the ear or ears or perceiving the light flashing from the telephone or the vibration of the vibrating unit, is informed of the call incoming, manually stops the radio, the headphone stereo player, or the like, and removes the earphone, the headphone, or the like from the ear or ears before answering the telephone call.

However, the following three problems have been encountered with the conventional telephones.

As a first problem, it is possible to cite that it is difficult for the user to become aware of the call incoming to the telephone.

With the installation-type telephone, when the user is listening to music or the like from such as the headphone stereo player by wearing the headphone or the like at the ears, since the headphone or the like blocks the external auditory meatus from the external world, the call-incoming sound issued from the telephone during the call incoming is difficult to hear by being blocked by the headphone or the like. When the volume of music or the like to which the user is listening is large, the call-incoming sound becomes even more difficult to hear.

With the portable telephone, since the situation in which an incoming call is received is often in a noisy environment flooded with noise in a train, a construction site, or the like, when the user is listening to music or the like from such as the headphone stereo player by wearing the headphone or the like at the ears in such a situation, not only does the headphone or the like block the call-incoming sound, but also the large volume of the sound generated in the external world muffles the call-incoming sound. Therefore, it is frequently difficult for the user to hear the call-incoming sound generated from the telephone at the time of the call incoming.

In addition, with the method of notifying the call incoming by flashing the light and the method of notifying the call incoming by imparting the vibration of the vibrating unit, in the case of the installation-type telephone, insofar as the telephone is in a visible range in the former method, and the vibrating unit is substantially in contact with a part of the physical body in the latter method, these methods are effective for notifying the call incoming irrespective of the volume of music or the like to which the user is listening from the headphone stereo player or the like by wearing the headphone or the like at the ears, or the sound being generated in the external world. In the case of the portable telephone, on the other hand, since the portable telephone is often carried by being accommodated in a pocketbook, a brief case, or the like, when there is an incoming call in this situation, it is impossible for the user to become aware of the flashing of the like and the vibration of the vibrating unit.

Next, as a second problem, it is possible to cite that the action required until the user answers the telephone call after becoming aware of the call incoming is troublesome.

With the above-described installation-type telephone and portable telephone, when the user has become aware of the call incoming to the telephone through one of the above-described four methods while the user is listening to such as a radio program from a radio or the like by wearing an earphone or the like on an ear, it is necessary for the user to stop the radio or the like by a manual operation and then remove the earphone or the like from the ear before answering the telephone call. Hence, the user is unable to quickly answer the telephone call after becoming aware of the call incoming. Further, there is a possibility of breaking the equipment such as the radio, the telephone, or the like in a hasty attempt to quickly answer the telephone call.

Further, as a third problem, depending on the situation in which the incoming call is received, the portable telephone transmits unwanted sound other than the transmitting voice to the other party of the telephone.

In the case of the portable telephone, since the situation in which it is placed when the user is engaged in a telephone conversation at the time of receiving an incoming call is frequently that of a compartment of a vehicle or train, a construction site, or the like, if a telephone call is made in such a situation, the transmitter picks up both the transmitting voice and the sound generated in the external world and converts the same to a signal. Therefore, there is a possibility that the transmitting voice produced by the user becomes difficult for the other party of the telephone to listen to.

### SUMMARY OF THE INVENTION

It is a primary object of the present invention to provide an adapter apparatus for a telephone which is interposed between, on the one hand, a telephone and a headphone stereo player or the like and, on the other hand, a headphone or the like so that the call incoming can be notified to the user through the headphone or the like when the telephone has received a call while the user is listening to music or the like from the headphone stereo player or the like by wearing the headphone or the like at the ears, so as to mutually transmit and receive signals for producing sound, thereby overcoming the above-described first problem.

It is a secondary object of the present invention to provide an adapter apparatus for a telephone which is interposed between, on the one hand, a telephone and a radio or the like and, on the other hand, an earphone or the like and a sound collecting device for collecting transmitting voice so that the user is able to quickly answer the telephone call by wearing the earphone or the like at the ear after stopping the radio or the like by a manual operation and without removing the earphone or the like from the ear, so as to mutually transmit and receive signals for producing sound, thereby overcoming the above-described second problem.

It is a tertiary object of the present invention to provide an adapter apparatus for a telephone in which a sound collecting device is provided with a bone conduction microphone for collecting transmitting voice through bone conduction so as to collect only the transmitting voice even in a situation of a train compartment, a construction site, or the like, and which is interposed between, on the one hand, a telephone and a headphone stereo player or the like and, on the other hand, a headphone or the like and the bone conduction microphone, so as to mutually transmit and receive signals for producing sound, thereby overcoming the above-described third problem.

In accordance with a first aspect of the present invention, the above-described first object is attained by an adapter apparatus for a telephone which is interposed between a telephone and a sound reproducing device which can be freely fitted to an ear for converting a received signal to sound and between an audio-signal output device and the sound reproducing device so as to generate a signal for producing sound and allow mutual transmission and reception therebetween, comprising: a detecting portion for detecting an incoming signal from the telephone; and a switchover portion for effecting a switchover operation concerning the transmission of a receiving speech signal from the telephone and an audio signal from the audio-signal output device to the sound reproducing device, wherein the detecting portion generates a switchover command signal for commanding execution of a switchover operation to the switchover portion on the basis of the incoming signal, the switchover portion is arranged to receive the receiving speech signal and the audio signal and transmit the same to the sound reproducing device, and in response to the switchover command signal the switchover portion is arranged to effect the switchover operation so as to render the receiving speech signal selectable between the receiving speech signal and the audio signal or transmit to the sound reproducing device the receiving speech signal and the audio signal whose signal level is lowered to a predetermined signal level.

In accordance with a second aspect of the present invention, the above-described second object is attained by the adapter apparatus for a telephone according to the first aspect of the invention which further comprises: a calling portion capable of generating a call signal for starting up a speech receiving function and a speech transmitting function provided in the telephone; and a stopping portion capable of generating a stop signal for stopping the speech receiving function and the speech transmitting function, wherein the telephone is capable of transmitting speech by a sound collecting device which can be freely fitted to the ear, collects transmitting voice, and converts the same to a transmitting speech signal.

In accordance with a third aspect of the present invention, the above-described second object is also attained by the adapter apparatus for a telephone according to the second aspect of the invention, wherein the detecting portion is arranged to generate a call command signal for commanding the transmission of the call signal on the basis of the incoming signal, and the calling portion is arranged to generate the call signal simultaneously with the reception of the call command signal or after the lapse of a predetermined time.

In accordance with a fourth aspect of the present invention, the above-described second object is also attained by the adapter apparatus for a telephone according to the third aspect of the invention, wherein, simultaneously with the transmission of the stop signal, the stopping portion is arranged to issue to the switchover portion a reset command signal for commanding so as allow the audio signal to be transmitted to the sound reproducing device in a state persisting prior to the call incoming, and the switchover portion, upon receipt of the reset command signal, is arranged to transmit the audio signal to the sound reproducing device inn the state persisting prior to the call incoming.

In accordance with a fifth aspect of the present invention, the above-described second object is also attained by the adapter apparatus for a telephone according to the second or fourth aspect of the invention, wherein the operation of outputting the audio signal by the sound reproducing device and the setting of its signal level are remotely controllable by a remote controller, and the operation of transmission of at least one of the call signal and the stop signal by the sound reproducing device is remotely controllable by the remote controller.

In accordance with a sixth aspect of the present invention, the above-described second object is also attained by the adapter apparatus for a telephone according to any one of the second to fifth aspects of the invention, wherein the sound reproducing device is an earphone which is supported in such a manner as to be freely fitted to either one of left and right ears, and the sound collecting device is a microphone which is supported in such a manner as to be freely fitted to another ear.

In accordance with a seventh aspect of the present invention, the above-described tertiary object is attained by the adapter apparatus for a telephone according to any one of the second to fifth aspects of the invention, wherein the sound reproducing device is headgear having two headphones which are supported in such a manner as to be freely fitted to left and right ears, respectively, and at least one of the headphones is provided with a bone conduction microphone for collecting voice at the external auditory meatus through bone conduction.

Namely, in the first aspect of the present invention, before an incoming call is received by the telephone, an audio signal is transmitted from the audio-signal output device to the sound reproducing device via the switchover portion incorporated in the adapter apparatus, and is converted to sound. Upon receiving an incoming call, the telephone transmits a call-incoming signal to the detecting portion. The detecting portions, upon receiving the call-incoming signal, transmits a switchover command signal to the switchover portion. In response to the switchover command signal, the switchover portion is switched so as to transmit to the sound reproducing device the receiving speech signal by selecting the receiving speech signal between the receiving speech signal and the audio signal or transmit to the sound reproducing device the receiving speech signal and the audio signal whose signal level is lowered to a predetermined signal level. As a result, at least one of the sound from the sound reproducing device with a volume lowered to a 0 level or a predetermined level, the call-incoming sound based on the call-incoming signal, and the receiving voice based on the receiving speech signal is generated, so that the user is able to know the call incoming to the telephone.

In addition, in the second aspect of the present invention, after knowing the call incoming to the telephone by the lowered volume of the sound which the user was listening from the sound reproducing device, the user operates the calling portion incorporated in the adapter apparatus to transmit a call signal to the telephone. Upon receiving the call signal, the telephone starts the speech receiving function and transmits the receiving speech signal to the switchover portion, and starts the speech transmitting function. The receiving speech signal is transmitted to the sound reproducing device via the switchover portion, and is converted to the receiving voice. Meanwhile, the transmitting voice collected by the sound collecting device is converted to a transmitting speech signal, and is transmitted to the telephone. As a result, after stopping the audio-signal output device, the user is able to quickly cope with the phone call in the state in which the sound reproducing device is still worn at the ears without removing the sound reproducing device from the ears.

Further, in accordance with the third aspect of the present invention, the bone conduction microphone provided in the headphone fitted to one ear does not pick up the sound being generated in the external world, and collects only the transmitting voice at the external auditory meatus through bone conduction. As a result, a clear transmitting voice which does not include noise caused in the external world is converted to the transmitting speech signal, which is transmitted to the telephone via the switchover portion, and is transmitted to the other party of the telephone.

The above and other objects, features and advantages of the present invention will become more apparent from the following detailed description of the invention when read in conjunction with the accompanying drawings.

### BRIEF DESCRIPTION OF THE DRAWINGS

Fig. 1 is a block diagram of an adapter apparatus in accordance with a first embodiment of the present invention;
Fig. 2 is a block diagram of an adapter apparatus in accordance with a second embodiment of the present invention; and
Figs. 3(a) and 3(b) are diagrams illustrating a schematic configuration of a switchover portion shown in Fig. 2, wherein Fig. 3(a) shows the state before the switchover operation is effected, while Fig. 3(b) shows the state after the switchover operation is effected.

### DESCRIPTION OF THE PREFERRED EMBODIMENTS

Hereafter, a description will be given of the embodiments of the present invention with reference to the accompanying drawings.

### First Embodiment

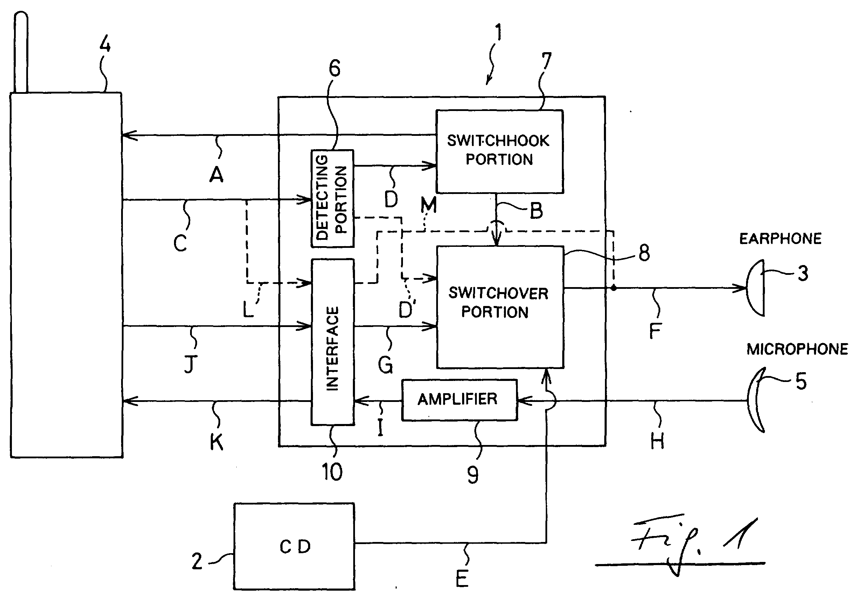

Fig. 1 is a block diagram illustrating the relationship between an adapter apparatus 1 in accordance with a first embodiment and equipment which is connected thereto.

The adapter apparatus 1 connects, for example, a CD player body 2 serving as an audio-signal output device to a receiving headphone 3 such as an earphone serving as a sound reproducing device, and connects a portable telephone 4 to the receiving headphone 3 and a transmitting headphone 5 such as a microphone serving as a sound collecting device.

A detecting portion 6, a switchhook portion 7 serving as a calling portion and a stopping portion, a switchover portion 8, an amplifier 9, and an interface 10 are incorporated in the above-described adapter apparatus 1.

The detecting portion 6 for detecting a call-incoming signal transmitted thereto from the aforementioned portable telephone 4 via a path C is so set as to transmit a call command signal to the switchhook portion 7 via a path D after the lapse of a predetermined time subsequent to the detection. Here, the call command signal is a signal for commanding the switchhook portion 7 to transmit a call signal for starting up the speech receiving function and the speech transmitting function provided in the portable telephone 4 from the switchhook portion 7 to the portable telephone 4.

It should be noted that, in this embodiment, the timing for transmitting the call command signal by the detecting portion 6 is set to be after the lapse of a predetermined time subsequent to the detection of the call-incoming signal, but this timing can also be set to be at the same time as the detection of the call-incoming signal.

A switching circuit (not shown) formed by a switchhook (not shown) and the like is incorporated in the switchhook 7 for receiving the call command signal from the detecting portion 6, and is so set as to transmit the call signal to the portable telephone 4 via a path A when the switchhook (not shown) is closed to make the switching circuit (not shown) a closed circuit or transmit a stop signal to the portable telephone 4 via the path A when the switchhook (not shown) is opened to make the switching circuit (not shown) an open circuit.

In addition, the above-described switchhook portion 7 is so set that the switchhook (not shown) is closed on the basis of the received call command signal so as to form the aforementioned closed circuit, and is also so set that the closing and opening of the switchhook (not shown) can be controlled by a manual operation as a hook (not shown) for allowing a user to manually operate the closing and opening of the switchhook (not shown) is provided on the switchhook portion 7.

Further, at the same time as the transmission of the call signal to the portable telephone 4, the switchhook portion 7 transmits a switchover command signal to the switchover portion 8 via a path B so as to execute a switching operation in order to shut off the sound from the CD player body 2 being received by the receiving headphone 3 and receive speech from the portable telephone 4.

In addition, the switchhook portion 7 is also so set that, at the same time as the transmission of the stop signal to the portable telephone 4, the switchhook portion 7 transmits a reset command signal to the switchover portion 8 via the path B so as to transmit an audio signal from the CD player body 2 to the receiving headphone 3 in the state persisting prior to the call incoming.

By means of the switchhook portion 7 configured as described above, the call command signal or the call signal based on the manual operation of the hook (not shown) by the user, or the stop signal based on another manual operation of the hook (not shown) by the user, is transmitted from the switchhook portion 7 to the portable telephone 4 via the path A.

The switchover portion 8 connected to the switchhook portion 7 incorporates a switching circuit (not shown) formed by a switching element (not shown), a relay element (not shown), and the like. The switching element (not shown) connects a path F to one of a path E and a path G so that either one of two signals, including the receiving speech signal transmitted from the portable telephone 4 via paths J and G via the interface 10 and the audio signal transmitted from the CD player body 2 via the path E, will be transmitted to the receiving headphone 3. The aforementioned relay element (not shown) controls the switching element (not shown) so that the path G and the path F will be connected when the aforementioned switchover command signal is received, or the path E and the path F will be connected when the aforementioned reset command signal is received.

When the switchover portion 8 configured as described above has received the switchover command signal, only the receiving speech signal transmitted from the portable telephone 4 is transmitted to the receiving headphone 3 via the switchover portion 8. On the other hand, when the switchover portion 8 has received the reset command signal, the audio signal transmitted from the CD player body 2 is transmitted to the receiving headphone 3 via the switchover portion 8 in the state persisting prior to the call incoming.

The amplifier 9 connected to the transmitting headphone 5 is so set as to amplify a transmitting speech signal transmitted thereto from the transmitting headphone 5 via a path H and transmit the same to the interface 10 via a path I.

The interface 10, which is interposed between, on the one hand, the portable telephone 4 and, on the other hand, the switchover portion 8 and the amplifier 9, is so set as to adjust the signal level of the receiving speech signal transmitted thereto from the portable telephone 4 via the path J to a signal level which can be received by the receiving headphone 3, and to adjust the signal level of the transmitting speech signal amplified by the amplifier 9 and transmitted via the path I to a signal level which can be received by the portable telephone 4 and transmit the same to the portable telephone 4 via a path K.

It should be noted that, in this embodiment, a description has been given of the adapter apparatus in a case where the signal levels used by the portable telephone 4, the receiving headphone 3, and the transmitting headphone 5 differ, it is unnecessary for the interface 10 to be incorporated in the adapter apparatus in a case where the aforementioned signals levels are at the same level for the portable telephone 4, the receiving headphone 3, and the transmitting headphone 5.

The switching operation is effected in the process described below by the adapter apparatus 1 configured as described above.

After a portion of the call-incoming signal from the portable telephone 4 is transmitted to the interface 10 via the path L, and is adjusted to the signal level which can be received by the receiving headphone 3, the signal is transmitted to the receiving headphone 3 via the path F, is converted to incoming speech of a predetermined speech level, and is transmitted to the external auditory meatus (not shown).

Meanwhile, when the call-incoming signal transmitted from the portable telephone 4 via the path C is received, the detecting portion 6 transmits the call command signal to the switchhook portion 7 via the path D. Upon receiving the call command signal, the switchhook (not shown) is closed, and the call signal is transmitted from the switchhook portion 7 to the portable telephone 4 via the path A, and at the same time the switchover command signal is transmitted to the switchover portion 8 via the path B.

The switchover portion 8 provides control such that the relay element (not shown) which has received the switchover command signal connects the path G and the path F by means of the switching element (not shown), thereby allowing only the receiving speech signal to be transmitted to the receiving headphone 3 via the path F.

On the other hand, upon receiving the call signal from the switchhook portion 7, the portable telephone 4 is set in a state in which it is capable of transmitting the receiving speech signal to the interface 10 via the path J and of receiving the transmitting speech signal from the transmitting headphone 5 via the path K.

The receiving speech signal transmitted from the portable telephone 4 via the path J is adjusted by the interface 10 to a signal level which can be received by the receiving headphone 3. The receiving speech signal is then transmitted to the switchover portion 8 via the path G, is further transmitted to the receiving headphone 3 via the path F, is converted to receiving voice, and is transmitted to the external auditory meatus (not shown).

It should be noted that although, in this embodiment, the call incoming to the portable telephone 4 is notified to the user by means of the adapter apparatus 1 configured as described above, the call incoming may be notified by setting the detecting portion 6 and the interface 10 incorporated in the adapter apparatus 1 as follows.

That is, a setting is first provided such that the detecting portion 6 incorporated in the adapter apparatus 1 detects the call-incoming signal transmitted from the portable telephone 4 via the path C, and transmits the switchover command signal to the switchover portion 8 via a path D' (broken line) on the basis of that detection.

Next, after the interface 10 incorporated in the adapter apparatus 1 receives the call-incoming signal transmitted from the portable telephone 4 via the path L (broken line), the interface 10 adjusts the signal to a signal level which can be received by the receiving headphone 3, and then transmits the same to the receiving headphone 3. This arrangement permits the aforementioned notification of the call incoming.

In other words, the switchover command signal is transmitted by the detecting portion 6 via the path D' on the basis of the call-incoming signal transmitted from the portable telephone 4 via the path C.

The switchover portion 8, upon receiving the switchover command signal from the detecting portion 6, makes it possible to select the receiving speech signal between the audio signal transmitted thereto from the CD player body 2 via the path E and the receiving speech signal transmitted thereto from the portable telephone 4 via the paths J and G, and is switched over to transmit the same to the receiving headphone 3 via the path F.

Meanwhile, the interface 10 which has received the call-incoming signal transmitted thereto from the portable telephone 4 via the path L adjusts the call-incoming signal to a signal level which can be received by the receiving headphone 3, and transmits the same to the receiving headphone 3 via a path M.

Accordingly, since the receiving headphone 3 which has received the call-incoming signal transmitted thereto from the interface 10 via the path M converts the call-incoming signal to incoming speech of predetermined speech and outputs the same, the user, upon finding the call incoming to the portable telephone 4 by hearing the incoming speech, manually operates the switchhook portion 7 to transmit the call signal from the switchhook portion 7 to the portable telephone 4 and start up the speech receiving function and the speech transmitting function, and is thereby able to receive and transmit speech.

Meanwhile, the transmitting voice collected by the transmitting headphone 5 is converted to a transmitting speech signal, is amplified by the amplifier 9, and is transmitted to the interface 10. Subsequently, the transmitting speech signal is adjusted by the interface 10 to a signal level which can be received by the portable telephone 4, and is transmitted to the portable telephone 4 via the path K, thereby allowing the transmitting voice to be transmitted to the other party of the telephone.

The speech receiving and transmitting operations are effected through the above-described process, and the arrangement provided in this embodiment is such that the switchhook (not shown) is opened by manually operating the hook (not shown) so as to transmit the stop signal from the switchhook portion 7 to the portable telephone 4 via the path A, thereby disconnecting the phone.

In addition, in this embodiment, the user is able to engage in a telephone conversation while the user is listening to the sound such as music from the CD player body 2 via the receiving headphone 3. At that time, the telephone call is made by manually operating the hook (not shown) to close the switchhook (not shown), which transmits the call signal from the switchhook portion 7 to the telephone via the path A and starts up the speech receiving and transmitting functions, and then by dialing the telephone number and the like of the other party through a dialing function provided in the portable telephone 4.

It should be noted that although the arrangement provided in this embodiment is such that the CD player body 2 continues to transmit the audio signal up to the switchover portion 8 via the path E while the call is being made via the adapter apparatus 1, an arrangement may be provided such that the CD player body 2 is stopped while the call is being made, and the CD player body 2 may be restarted at the same time as the termination of the call.

To this end, it suffices if a control unit (not shown) which is capable of transmitting to the CD player body 2 an output start signal for commanding so as to the start the output of the audio signal and an output stop signal for commanding so as to stop the output is incorporated in the adapter apparatus 1, the detecting portion 6 issues a stop command signal for commanding the transmission of the output stop signal to the control unit (not shown) on the basis of the call-incoming signal, and the switchhook portion 7 transmits the stop signal to the telephone and issues a start command signal for commanding the transmission of the output start signal to the control unit (not shown).

### Second Embodiment

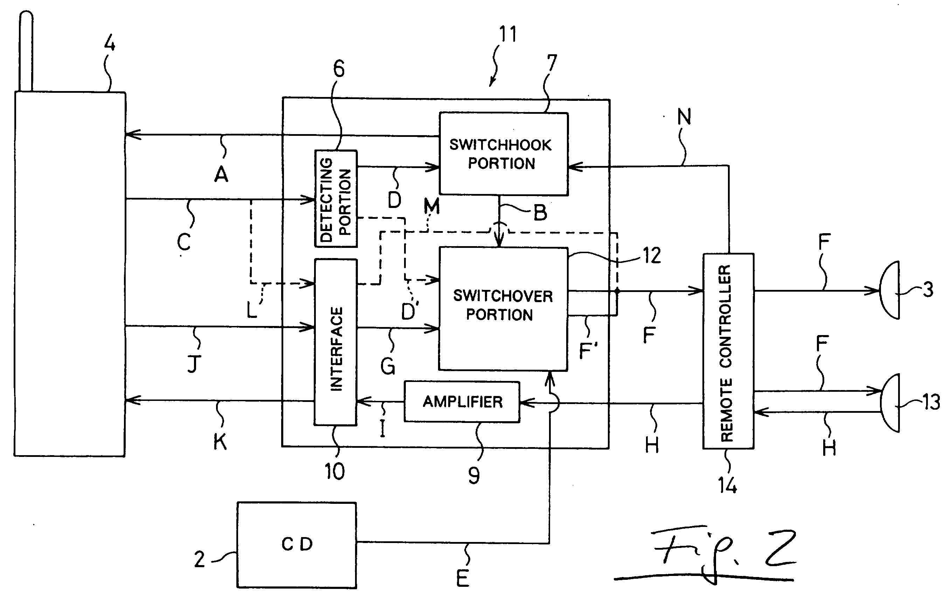

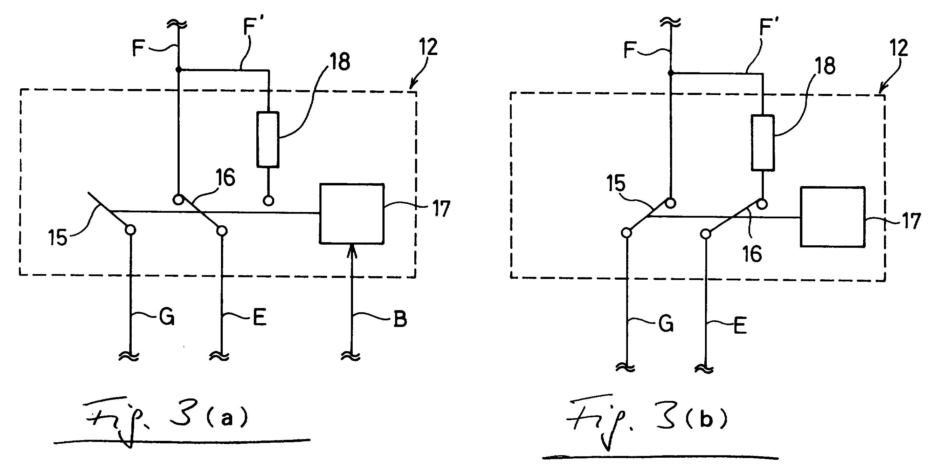

Next, a description will be given of a second embodiment of the present invention with reference to Figs. 2 and 3. It should be noted that, in Fig. 2, those portions having similar functions to those of the first embodiment will be denoted by the same reference numerals, and a description thereof will be omitted.

Fig. 2 shows a block diagram of an adapter apparatus 11 in accordance with the second embodiment.

The adapter apparatus 11 incorporates a switchover portion 12 for effecting a switchover operation which is different from that of the first embodiment and will be described later, and a transmitting/receiving headphone 13 which serves as both the sound reproducing device and the sound collecting device is connected thereto. Further, a remote controller 14 for remote controlling the output operation and the signal level of the audio signal concerning the CD player body 2 is interposed between, on the one hand, the adapter apparatus 11 and, on the other hand, the receiving headphone 3 and the transmitting/receiving headphone 13.

As shown in Figs. 3(a) and 3(b), the switchover portion 12 incorporates a switching circuit (not shown) formed by switching elements 15 and 16, a relay element 17, and the like, and a path F' having a load 18 for causing the signal level to drop to a predetermined level is newly connected to the path F extending from the switchover portion 12 to the remote controller 14.

Figs. 3(a) and 3(b) respectively show the states of connection of the switching elements 15 and 16 before and after the call incoming.

Before the call incoming, the path E and the path F are only connected by the switching element 15, so that only the audio signal from the CD player body 2 is transmitted to the receiving headphone 3 and the transmitting/receiving headphone 13.

Upon receiving the switchover command signal transmitted from the switchhook portion 7 via the path B, the relay element 17 controls the switching elements 15 and 16 such that the path E and the path F' are connected, and the path G and the path f are connected.

Accordingly, by virtue of the adapter apparatus 11 in accordance with this embodiment, there is an advantage in that the signal level of the audio signal such as that of music outputted from the CD player body 2 is lowered and can be used as background music or the like during the call.

As the aforementioned transmitting/receiving headphone 13, a headphone is used which has a speech receiving function similar to that of the receiving headphone 3 and is arranged such that at least a portion of a bone conduction microphone (not shown) is able to come into contact with the external auditory meatus (not shown). The bone conduction microphone (not shown) collects the transmitting voice from the tragal cartilage portion by the action of bone conduction, and converts the same to a transmitting speech signal, thereby allowing the speech to be transmitted.

Since the bone conduction microphone (not shown) is used as the sound collecting device, since the sound being generated in the external world is not picked up while the call is being made, it is possible to transmit a clear sending voice to the other party of the telephone.

The remote controller 14 controls the starting and stopping of the CD player body 2 via the path E by means of the switchover portion 8, and in this embodiment the remote controller 14 is capable of transmitting the switchover command signal and the call command signal to the switchhook portion 7 via the path N. For this reason, the remote controller 14 is provided with a switchover command function button (not shown) and a call command function button (not shown) which are manually operated by the user, with the result that the remote controller 14 is provided with the switchover command function and the call command function.

By virtue of the above-described remote controller 14, not only can the starting and stopping of the CD player body 2 be remote controlled, but also the speech receiving and transmitting functions provided in the portable telephone 4 can be started up by remote control.

It should be noted that, in the above-described first and second embodiments, the adapter apparatus in accordance with the present invention is arranged such that the audio-signal output device is connected to the sound reproducing device, and the telephone is connected to the sound collecting device and the sound reproducing device, so as to effect transmission and reception of the audio signal, the receiving speech signal, and the transmitting speech signal converted to electrical signals, but as another form of the adapter apparatus, a form is conceivable in which the adapter apparatus is interposed between the audio-signal output device and the sound reproducing device and between, on the one hand, the telephone and, on the other hand, the sound collecting device and the sound reproducing device, and the transmission and reception of the audio signal, the receiving speech signal, and the transmitting speech signal are effected by converting these signals to electromagnetic waves.

In addition, although, in the above-described first and second embodiments, the adapter apparatus in accordance with the present invention has been described as being arranged separately from the telephone and the audio-signal output device, as other forms of the adapter apparatus, it is also possible to adopt a form in which a connector which can be fitted to a connector provided on the telephone is provided on the adapter apparatus, and the telephone and the adapter apparatus are connected to each other via the connectors, and a form in which the audio-signal output device, the telephone, and the adapter apparatus are formed integrally.

As described above, in accordance with the first embodiment, the arrangement provided is such that, upon receiving an incoming call, the telephone transmits a call-incoming signal to the detecting portion, the detecting portion, upon receiving the call-incoming signal, transmits a switchover command signal to the switchover portion, which, in response the switchover command signal, is switched so as to render the receiving speech signal selectable between the receiving speech signal and the audio signal or transmit to the sound reproducing device the receiving speech signal and the audio signal whose signal level is lowered to a predetermined signal level. As a result, by providing a setting in advance such that at least one of the sound from the sound reproducing device with a volume lowered to a 0 level or a predetermined level, the call-incoming sound based on the call-incoming signal, and the receiving voice based on the receiving speech signal is selected and generated, the user is able to reliably know the call incoming to the telephone.

In addition, in accordance with the first embodiment, since the arrangement provided is such that the detecting portion which has received the call-incoming signal from the telephone transmits the call command signal to the calling portion, and the calling portion transmits the call signal to the telephone on the basis of the call command signal. Accordingly, the speech receiving function and the speech transmitting function provided in the telephone are started up by the call signal. As a result, the user is able to receive or transmit speech by the sound reproducing device and the sound collecting device in the state in which the sound reproducing device is being worn at the ears without stopping the audio-signal output device. Hence, it becomes unnecessary to engage in the troublesome operation of stopping the audio-signal output device and removing the sound reproducing device from the ears, and is therefore able to effect the speech receiving and transmitting operation speedily.

Further, in accordance with the second embodiment, since the arrangement provided is such that the bone conduction microphone provided in the headphone fitted to one ear does not pick up the sound being generated in the external world, and collects only the transmitting voice at the tragal cartilage portion through bone conduction, the bone conduction microphone converts the transmitting voice to the transmitting speech signal, and transmits the same to the telephone via the switchover portion. Hence, it is possible to transmit a clear transmitting voice to the other party of the telephone.

## Claims

1. An adapter apparatus (1, 11) for a telephone which is interposed between a telephone (4) and a sound reproducing device (3) which can be freely fitted to an ear for converting a received signal to sound and between an audio-signal output device (2) and the sound reproducing device (3) so as to generate a signal for producing sound and allow mutual transmission and reception therebetween,
comprising:
- a detection portion (6) for detecting a call-incoming signal from the telephone (4); and
- a switchover portion (8, 12) for effecting a switchover operation concerning the transmission of a receiving speech signal from the telephone (4) and an audio signal from the audio-signal output device (2) to the sound reproducing device (3),
- wherein the detecting portion (6) generates a switchover command signal for commanding execution of a switchover operation to the switchover portion (8, 12) on the basis of the call-incoming signal, the switchover portion (8, 12) is arranged to receive the receiving speech signal and the audio signal and transmit the same to the sound reproducing device (3), and in response to the switchover command signal the switchover portion (8, 12) is arranged to effect the switchover operation so as to render the receiving speech signal selectable between the receiving speech signal and the audio signal or transmit to the sound reproducing device (3) the receiving speech signal and the audio signal whose signal level is lowered to a predetermined signal level.

2. The apparatus according to claim 1,
further comprising:
- a calling portion (7) capable of generating a call signal for starting up a speech receiving function and a speech transmitting function provided in the telephone (4); and
- a stopping portion (7) capable of generating a stop signal for stopping the speech receiving function and the speech transmitting function,
- wherein the telephone (4) is capable of transmitting speech by a sound collecting device (5) which can be freely fitted to the ear, collects transmitting voice, and converts the same to a transmitting speech signal.

3. The apparatus according to claim 2,
wherein the detecting portion (6) is arranged to generate a call command signal for commanding the transmission of the call signal on the basis of the call-incoming signal, and the calling portion (7) is arranged to generate the call signal simultaneously with the reception of the call command signal or after the lapse of a predetermined time.

4. The apparatus according to claim 3,
wherein, simultaneously with the transmission of the stop signal, the stopping portion (7) is arranged to issue to the switchover portion (8, 12) a reset command signal so as to allow the audio signal to be transmitted to the sound reproducing device (3) in a state persisting prior to the call incoming, and the switchover portion (8, 12), upon receipt of the reset command signal, is arranged to transmit the audio signal to the sound reproducing device (3) in the state persisting prior to the call incoming.

5. The apparatus according to claim 2 or 4,
wherein the operation of outputting the audio signal by the sound reproducing device (3) and the setting of its signal level are remotely controllable by a remote controller (14), and the operation of transmission of at least one of the call signal and the stop signal by the sound reproducing device (3) is remotely controllable by the remote controller (14).

6. The apparatus according to any of claims 2 to 5,
wherein the sound reproducing device (3) is an earphone (3) which is supported in such a manner as to be freely fitted to either one of left and right ears, and the sound collecting device (5) is a microphone (5) which is supported in such a manner as to be freely fitted to another ear.

7. The apparatus according to any of claims 2 to 5,
wherein the sound reproducing device (13) is a headgear having two headphones which are supported in such a manner as to be freely fitted to left and right ears, respectively, and at least one of the headphones is provided with a bone conduction microphone for collecting voice at the external auditory meatus through bone conduction.
